(19)

**Europäisches Patentamt**

**European Patent Office**

**Office européen des brevets**

(11) Numéro de publication: **0 061 391**
**B1**

(12)    # FASCICULE DE BREVET EUROPEEN

(45) Date de publication du fascicule du brevet:
10.07.85

(51) Int. Cl.⁴: **H 04 B 7/185**

(21) Numéro de dépôt: **82400466.7**

(22) Date de dépôt: **15.03.82**

(54) Réseau à système AMRT et notamment partie réception d'un coupleur d'accès à un tel réseau.

(30) Priorité: **19.03.81 FR 8105910**

(43) Date de publication de la demande:
**29.09.82 Bulletin 82/39**

(45) Mention de la délivrance du brevet:
**10.07.85 Bulletin 85/28**

(84) Etats contractants désignés:
**DE GB IT**

(56) Documents cités:
**US - A - 4 135 156**

**EUROCON '77 EUROPEAN CONFERENCE ON
ELECTROTECHNICS, 3 à 7 mai 1977, VENEZIA (IT), F.T.
KNABE et al. "A simple-TDMA satellite system in a
packet-switching data network", pages 3.2.4.1 à 3.2.4.6
IEEE TRANSACTIONS ON COMPUTERS, vol. C-29, no. 2,
février 1980, NEW YORK (US), J.F. BURNELL et al.
"Microprocessor utilization in satellite-born packet
switching", pages 206 à 208**

(73) Titulaire: **Etablissement Public de Diffusion dit
"Télédiffusion de France", 21-27 rue Barbès,
F-92120 Montrouge (FR)**
Titulaire: **Bertel, Noel Eugène, 7 Avenue Aristide Briand,
F-35000 Rennes (FR)**
Titulaire: **Duvic, Gérard Yves, 31 rue de Brest,
F-35000 Rennes (FR)**

(72) Inventeur: **Bertel, Noel Eugène, 7, Avenue Aristide
Briand, F-35000 Rennes (FR)**
Inventeur: **Borghatti, Jeanine épouse Vallin, 2, rue des
Sauges, F-35360 Montauban de Bretagne (FR)**
Inventeur: **Duvic, Gérard Yves, 31, rue de Brest,
F-35000 Rennes (FR)**

(74) Mandataire: **Le Guen, Louis François, Cabinet Louis Le
Guen 1, avenue Edouard VII B.P. 91, F-35802 Dinard
Cédex (FR)**

## Description

La présente invention concerne un réseau à système AMRT et en particulier la partie réception d'un coupleur d'accès à un réseau de communication numérique utilisant un système d'Accès Multiple par Répartition dans le Temps (ou système AMRT) exploité en mode paquet. Dans la suite, on considèrera, plus particulièrement, l'application du coupleur d'accès, suivant l'invention, dans un réseau de communication à satellite, mais son utilisation ne se limite pas à cette application.

On connaît déjà des réseaux à système AMRT, tels par exemple que le système TELECOM 1 qui a été décrit dans la revue technique française »L'ECHO DES RECHERCHES« par L. Fleury, J. P. Guénin et P. Ramat, No de juillet 1980, pages 11 à 20. Dans ce système, à chaque communication est allouée dans chaque trame un intervalle de temps. D'autres systèmes AMRT sont également mentionnés dans l'article technique américain intitulé »Synchronization Methods for TDMA« par P. P. Nuspl et autres, paru la revue »Proceedings of the IEEE«, Vol. 45, No. 3, Mars 1977, pages 434 à 444. Dans ces systèmes AMRT, on distingue des trames (en anglais: frames) qui se composent chacune de N salves (en anglais: burst). Chaque salve comprend un préambule AMRT, suivi d'un message, lui-même éventuellement suivi d'une conclusion (en anglais: postamble). Dans les message de ces salves, à chaque communication est allouée un intervalle de temps.

Dans le compte-rendu de la conférence EUROCON '77, pages 3.2.4.1 à 3.2.4.6, il est décrit un réseau de communication numérique AMRT dans lequel chaque salve comporte un préambule AMRT, suivi d'un message qui est formé de paquets de données contenant chacun son adresse de destination. Les paquets sont séparés par des drapeaux et le dernier drapeau est suivi d'un indicateur de fin de salve. Chaque préambule est semblable à la salve de référence, c'est-à-dire qu'il comporte un motif de 80 bits pour récupérer l'horloge, avec un mot de 16 bits pour la définition de début de salve.

Par ailleurs, on connaît des réseaux de communication numérique exploité en mode paquet, tels que le réseau TRANSPAC ou le système de diffusion DIDON. Dans ce cas, chaque paquet comporte un en-tête suivi d'un champ d'informations, l'en-tête contenant des informations de type de paquet, d'origine et/ou de destination du paquet, de longueur ou format du paquet, etc. Le début de chaque en-tête est précédé d'un motif de synchronisation octet.

Dans l'article de la revue technique »IEEE Transactions on Computers, Vol. C-29, N° 2, février 1980, pages 206 à 208, on a aussi décrit l'utilisation d'un microprocesseur dans un dispositif monté à bord d'un satellite. Chaque utilisateur dispose d'une ligne d'entrée série et d'un tampon de sortie sur le satellite. Les paquets transmis par un utilisateur au satellite sont mis en mémoire dans le tampon d'entrée qui lui est affecté. Le processeur explore les tampons d'entrée, comme s'il s'agissait de lignes locales dans un centre de commutation, puis transmet les paquets vers un réseau de commutation où l'adresse est exploitée. Tous les paquets transmis au satellite sont donc d'abord acceptés, leurs adresses étant lues en différé. Dans le sens satellite vers station, comme un canal est affecté à la station réception, elle n'a pas à rechercher les paquets qui lui sont destinés parmi d'autres.

Bien qu'il apparaisse que le système décrit dans la revue technique mentionée ci-dessus n'est pas un système AMRT, il faut noter que chaque paquet y a un en-tête qui contient les adresses de source et de destination, un numéro de séquence et d'autres informations d'état nécessaires. Une information de correction d'erreur est incluse dans l'en-tête. Associé à chaque registre à décalage est prévu un générateur de syndrome qui calcule le syndrome de l'en-tête au moment où il est écrit dans le registre à décalage. Quand un nouveau paquet entre dans le réseau des registres à décalage, son en-tête est corrigé en dirigent le syndrome vers les entrées d'adresse d'une mémoire morte ROM dont la sortie indique le motif d'erreur que le processeur utilise pour corriger l'en-tête. Toutefois ces actions ne se déroulent pas en temps réel.

De même, dans le brevet US-A-4 135 156, il est décrit un système de transmission de salves multiplexées en fréquence. Les salves sont acceptées et c'est seulement ensuite que les paquets sont triés dans la station terrestre de contrôle. Chaque paquet comporte, associé à un délimiteur de début, un en-tête contenant l'adresse de destination, l'adresse de source, l'information de contrôle et l'information de longueur du paquet, lequel se termine par un délimiteur de fin. Les délimiteurs et l'en-tête y sont, de préférence, accompagnés d'un codage de correction d'erreurs.

Un objet de l'invention consiste à prévoir un réseau à système AMRT dans lequel les paquets des salves comportent des en-têtes telles que celles qui ont été mentionées ci-dessus.

Dans le réseau de l'invention, chaque station en position d'écoute ou de réception découvre dans toutes les salves les paquets qui lui sont destinés en reconnaissant dans les en-têtes sa propre identité ou l'indentité d'un service diffusé à laquelle elle est abonnée. Donc, dans chaque station, on doit prévoir un moyen capable de lire chaque en-tête en temps réel. Dans la suite, ce moyen sera appelé la partie réception du coupleur d'accès de la station.

Le traitement d'un tel en-tête en temps réel est d'autant plus difficile que le débit numérique est plus élevé, ce qui est le cas dans les réseaux de communication à satellite dont on envisage l'utilisation dans un avenir proche. A titre indicatif, on envisage d'utiliser dans de prochains réseaux à satellite des débits numériques pouvant aller jusqu'à 34 Mbit/s. Par ailleurs, on sait que, dans les liaisons numériques par satellite, on peut rencontrer des taux d'erreurs de l'ordre de $10^{-4}$ (le taux usuel étant de $10^{-6}$), les erreurs étant supposées indépendantes. Donc, dans l'en-tête, les informations de délimitation étant exclues, on distingue une partie utile et une partie de redondance permettant de corriger l'en-tête, moins l'information de délimitation, avant de l'exploiter. Dans le système de l'invention, on a choisi, comme code de protection, un code BCH.

L'utilisation d'un code BCH entraîne la division de l'en-tête, moins l'information de délimitation, par un polynôme générateur. Dans les circuits classiques, on utilise des registres motés en diviseur et dont le câblage est figé. Il y est difficile de changer le polynôme générateur si le besoin s'en fait sentir.

Dans le système, suivant l'invention, les informations numériques sont ordonnées en octet. C'est pourquoi un objet de l'invention consiste à prévoir la partie réception du coupleur d'accès capable de traiter l'en-tête par octet, y compris la division par le polynôme générateur, dans laquelle le polynôme générateur peut être changé sans entraîner de modification de câblage.

Conformément à l'invention, les objets mentionnées ci-dessus sont atteints en mettant en oeuvre des combinaisons de moyens définis dans la partie caractérisante de la revendication principale complétée par les revendications dépendantes.

Les caractéristiques de l'invention mentionnées ci-dessus, ainsi que d'autres, apparaîtront plus clairement à la lecture de la description suivante d'un exemple de réalisation, ladite description étant faite en relation avec dessins joints, parmi lesquels:

la Fig. 1 est un ensemble de diagrammes illustrant une trame AMRT et les éléments de son contenu, suivant l'invention,

la Fig. 2 est un bloc-diagramme d'une station d'un réseau de communication à système AMRT, suivant l'invention,

la Fig. 3 est un bloc-diagramme de la partie réception du coupleur d'accès de la station de la Fig. 2,

la Fig. 4 est un schéma-bloc du circuit de décodage du coupleur de la Fig. 3,

la Fig. 5 est un schéma du circuit de division du circuit de décodage de la Fig. 4,

la Fig. 6 est un schéma du circuit de délimitation de paquet du coupleur de la Fig. 3.

Or a déjà rappelé que, dans un système AMRT, on distingue des trames se composant de salves, elles-mêmes composées chacune d'un préambule suivi de paquets. Suivant l'invention, chaque paquet comprend un en-tête suivi d'un champ d'informations.

A titre d'exemple, pour chaque station, la position temporelle de sa salve dans une trame et sa durée peuvent être définies, après échange de messages de signalisation entre les stations, dont l'une a pour rôle la gestion du réseau. Les messages de signalisation, comme d'autres messages de service, entre la station de gestion et les autres stations (et vice versa) sont transmis dans les salves correspondantes dans des paquets d'informations courants. Enfin, une des stations est choisie comme station pilote et émet systématiquement la première salve de chaque trame.

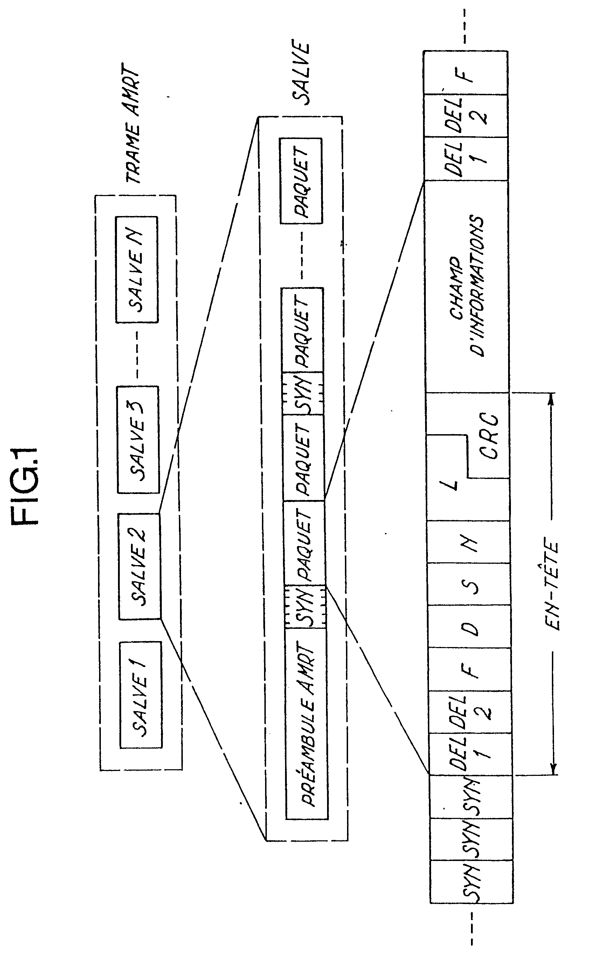

La Fig. 1 montre schématiquement sur une première ligne une trame AMRT comprenant la suite chronologique des salves 1 à N, successivement émise par des stations 1 à N. En pratique la salve 1 est la salve émise par la station pilote.

A la seconde ligne, on a montré, à plus grande échelle, la salve 2, qui comprend, comme au moins les salves 2 à N, un préambule de salve, puis une suite de paquets.

A la troisième ligne, on a montré à une échelle encore plus grande, un paquet, qui se trouve être celui qui suit immédiatement le préambule de la salve 2, mais qui pourrait être n'importe lequel des paquets suivants. Ce paquet, dont les éléments binaires sont rangés en octets, comprend un en-tête, précédé de deux octets délimiteurs DEL1 et DEL2 formant un fanion et suivi d'un champ d'informations. Entre, le préambule de salve et le premier paquet, la salve comprend un certrain nombre d'octets de »synchronisation octet« SYN. Entre les paquets suivants, la salve peut comprendre des octets SYN, qui servent alors d'octets de bourage.

Chaque préambule de salve contient la porteuse et des arrangements de récupération de »l'horloge éléments binaires«. Dans le premier paquet émis par la station pilote, est prévue une identification de début de trame.

Les octets DEL1 et DEL2 servent, dans les coupleurs d'accès, à repérer les débuts des en-têtes de paquets.

L'en-tête, proprement dit, commence par un octet de fonction F qui peut permettre d'identifier le type du paquet: paquet de signalisation, paquet de supervision ou paquet d'informations utiles. L'octet F est suivi d'un octet D qui sert à identifier la station destinatrice du paquet, d'un octet S qui sert à identifier la station émettrice du paquet et d'un octet N qui sert à identifier le numéro de la communication. D'autres utilisations des champs DSN sont possibles, notamment dans les applications de diffusion, de communications multipoints, etc. L'octet N est suivi d'un message L de 12 éléments binaires, soit 1,5 octet, qui sert à indiquer le nombre d'octes du champ d'informations, c'est à dire la longueur du message utile. La longueur maximale d'un tel massage est donc de 4096 octets. Le message L est suivi d'un message CRC de 12 éléments binaires soit aussi 1,5 octet, qui sert à la correction et à la détection des erreurs dans l'en-tête.

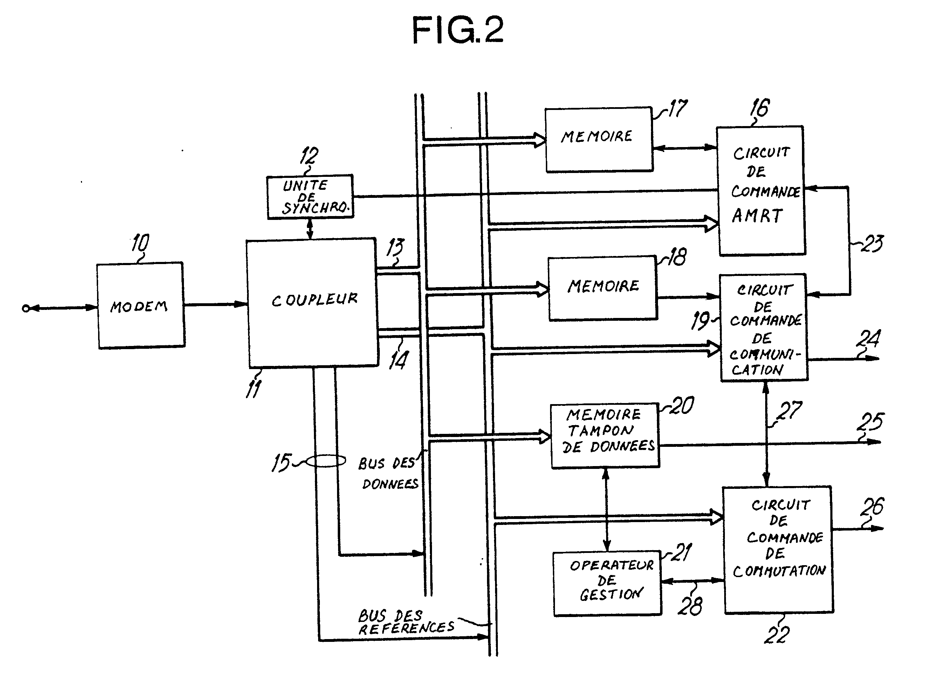

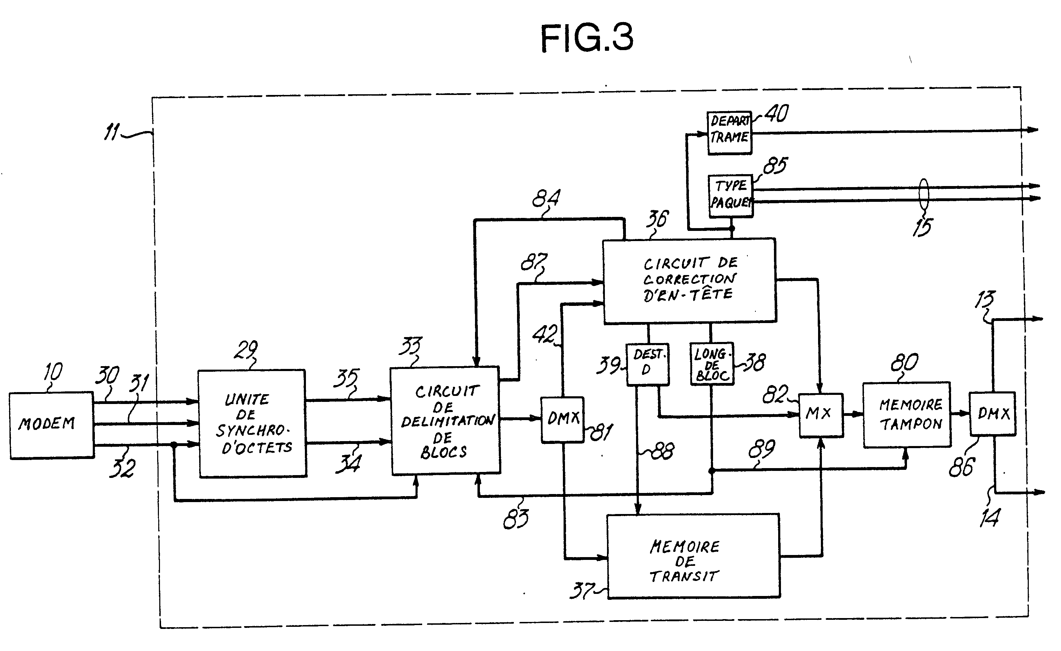

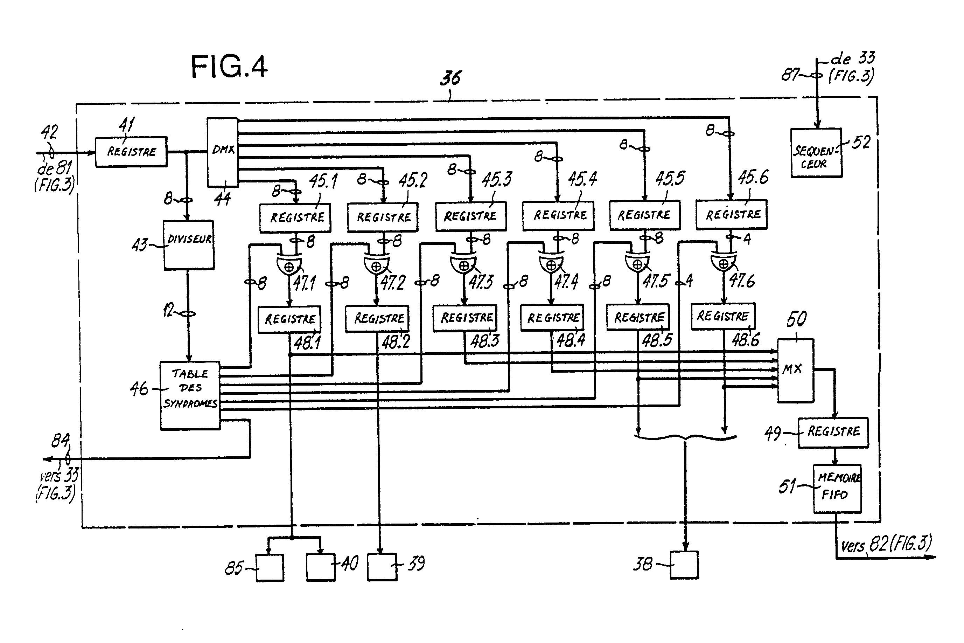

La station de la Fig. 2 comprend un modem 10 relié à un coupleur 11 qui est lui-même relié à une unité 12 de synchronisation AMRT, à un bus de données 13, à un bus des références 14 et à des liaisons 15 de commande des bus. L'unité de synchronisation 12 est reliée à un circuit de commande AMRT 16. Le bus de données 13 est relié, à travers une mémoire 17, au circuit 16, à travers une mémoire 18, à un circuit de commande de communications 19, et à une mémoire tampon de données 20. Un opérateur de gestion 21 est relié à la mémoire 20. Le bus des références 14 est relié aux circuits 16 et 19, ainsi qu'à un circuit de commande de commutation 22. Les circuits 16 et 19 sont reliés par une liaison 23. Le circuit 19 est relié à une liaison de signalisation 24. La mémoire tampon 20 est reliée à une liaison de données 25 et le circuit 22 est relié à une liaison de référence 26. Par ailleurs, le circuit 22 est relié au circuit 19 par une liaison 27 et à l'opérateur 21 par une liaison 28.

Le modem 10 est, dans le réseau à satellite, relié, par un émetteur-récepteur, non montré, à une antenne, également non montrée.

Le coupleur 11, dont la partie réception sera décrite plus en détail en relation avec la Fig. 3, sert, en émission, à émettre les salves vers le modem et, en réception, à recevoir les salves transmises par le modem et à les paquets.

A titre d'example, le circuit de commande AMRT 16 sert à fournir à l'unité de synchronisation 12 la position de la salve dans la trame et à négocier la longueur de la salve avec la station de gestion du réseau. En pratique, le circuit 16 traite la signalisation au niveau de l'accès AMRT, c'est à dire le partage de la trame entre les stations terrestres. Si nécessaire, le circuit 19 adresse, par la liaison 23, au circuit 16 des requêtes en ce qui concerne la capacité de transmission. Après ce dialogue préliminaire, le circuit 16 négocie avec la station de gestion la taille de la salve, puis répercute les instructions reçues de celle-ci.

A titre d'exemple, l'unité de synchronisation AMRT 12 sert, en fonction de l'information transmise par 16, à calculer l'instant d'émission de la salve émise par la station. Suivant la méthode de synchronisation adoptée, un ou deux repères de temps sont nécessaires, soit le départ de la trame AMRT qui permet de calculer le temps de transmission en boucle ouverte, soit encore le signal d'écho qui permet de contrôler la position de sa propre salve par rapport au départ de trame et donc de rectifier le temps de transmission. L'unité de synchronisation peut délivrer, à des instants appropriés, des ordres au coupleur 11.

La mémoire 17 emmagasine les paquets relatifs à la signalisation AMRT et à la supervision qui proviennent du coupleur 11 ou qui sont préparés par le circuit 16 et qui sont destinés au coupleur 11.

Le circuit 19 de commande des communications sert d'interface entre les protocoles de signalisation des utilisateurs de la station et le protocole de signalisation du réseau.

Si l'établissement d'une nouvelle communication est incompatible avec la capacité totale octroyée à la station, le circuit 19 déclenche un dialogue avec le circuit 16 pour faire augmenter la longueur de la salve. Si la salve est trop grande, le circuit 19 rend des intervalles de temps, à la station de gestion, par l'intermédiaire du circuit 16.

Le circuit de commutation 22 comprend une table des communications en cours. Le contenu de la table concerne les informations de routage et les références d'adressage des messages de données emmagasinés dans la mémoire générale 20. Ces références d'adresse sont obtenues par l'opérateur 21. En ce qui concerne l'établissement ou la libération des communications, les informations de mise à jour de la table sont délivrées au circuit 22 par le circuit 19. Le circuit 22 ordonne la mise en mémoire des messages provenant des utilisateurs et leur distribution vers ceux-ci à partir de la mémoire 20.

Le bus 13 transmet les informations du champ d'informations tandis que le bus 14 transmet les références, c'est à dire les contenus des octets, F, S, N et L dont une partie a déjà pu être utilisée dans le coupleur 11.

Le bus 15 établit en fonction du contenu de l'octet F exploité dans le coupleur 11 les connexions des bus 13 et 14 vers les circuits 17, 18 ou 20, ou 16, 19 ou 22.

Le coupleur 11, Fig. 3, comprend une unité 29 de synchronisation d'octets qui est reliée au modem 10 par une liaison de données 30, une liaison d'horloge d'éléments binaires 31 et un fil 32 portant l'information de la présence ou non de la porteuse. Par ailleurs, l'unité 29 est reliée à un circuit de délimitation de blocs 33, par un fil 34 de service et une liaison 35 à huit fils transmettant les octets en parallèle. Le fil 32 provenant du modem 10 est également relié à une entrée du circuit 33. Le circuit 33 a une sortie à huit fils reliée, par l'intermédiaire d'un démultiplexeur 81, d'une part, à l'entrée correspondante d'un circuit de correction d'en-tête 36 et, d'autre part, à l'entrée d'une mémoire de transit 37. Le démultiplexeur 81 oriente les sept premiers octets vers 36 et le reste vers 37. Le circuit 33 comporte encore une entrée reliée, par une liaison 83, à la sortie d'un circuit 38 d'évaluation de la longueur d'un bloc, dont la sortie est encore reliée à l'entrée d'une mémoire tampon 80 par une liaison 89. Le circuit 33 comporte enfin une entrée reliée, par l'intermédiaire d'un fil 84, à une sortie du circuit 36. Le circuit de correction 36 à une sortie reliée à l'entrée d'un circuit 39 d'évalnation de l'octet de destination D, une sortie reliée à l'entrée du circuit 38, une sortie reliée à un circuit 40 de détection du départ de trame, une sortie reliée à un circuit d'analyse de type de paquet 85 et une sortie reliée, par l'intermédiaire d'un multiplexur 82, à l'entrée de la mémoire tampon 80. Une sortie du circuit 39 est reliée par une liaison 88 à l'entrée de remise à zéro de la mémoire 37 tandis que son autre sortie est reliée à l'entrée de commande du multiplexur 82. La sortie de la mémoire 37 est reliée, par le multiplexeur 82, à l'entrée de la mémoire 80. Le circuit 85 comporte les sorties vers la liaison 15 de commande des BUS 13 et 14. La sortie de la mémoire 80 est reliée à un démultiplexeur 86 dont une sortie est reliée au BUS 13 et dont l'autre sortie est reliée au BUS 14. Une sortie du circuit 33 est reliée au circuit 36.

L'unité 29 effectue la récupération de la »synchronisation octet«, ce qui est obtenu en reconnaissant, élément binaire à élément binaire, un motif répété de seize éléments binaires appelé »SYN/ SYN«, délivré par 30, quand le modem a, par 32, signalé la présence de la porteuse avant le début de chaque salve reçue ou au cours d'une salve, si la porteuse a été perdue. La récupération de la synchronisation octet est signalée vers le circuit 33 par l'activation du fil 34. La liaison 35 transmet les éléments binaires en parallèle sur huit fils.

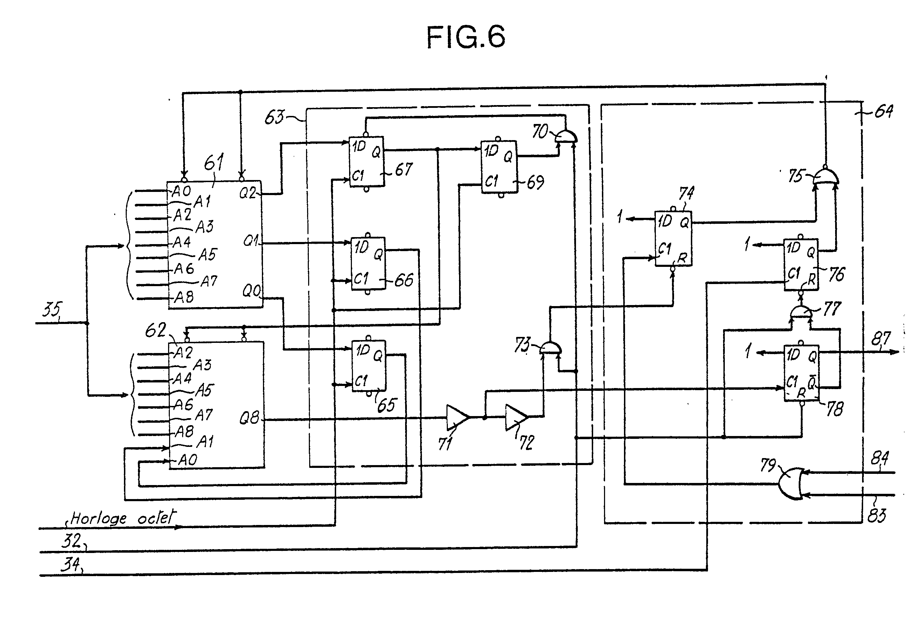

La délimitation des blocs est effectuée, dans le circuit 33, qui sera décrit en détail à la Fig. 6, en cherchant un motif de seize éléments binaires, appelé DEL1/DEL2. La recherche est effectuée chaque fois que la fin du paquet précédent est signalée par le circuit 38 et, bien entendu, au début de chaque salve quand le circuit 29 a acquis la synchronisation octet, ou encore en cours de salve après coupure et restauration de la porteuse.

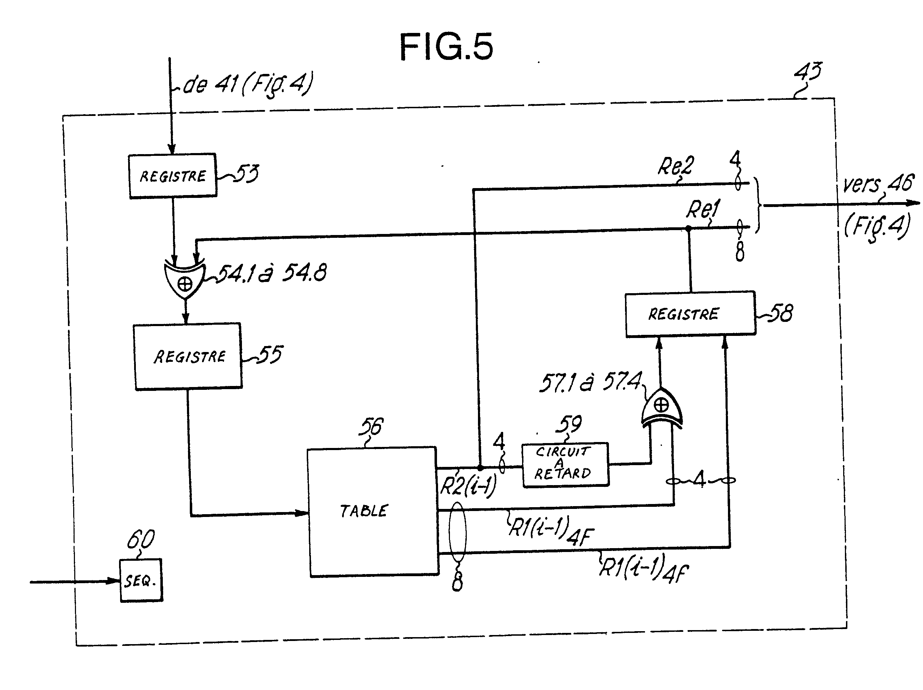

Avant de décrire en détail en relation avec les Fig. 4 et 5, le circuit de correction d'en-tête 36, on va considérer un example chiffré qui correspond à une réalisation en cours de développement, mais qui peut être utilisé dans un autre réseau à satellite. La durée d'une trame est de l'ordre de 25 ms, le débit de transmission de 34 Mb/s et la capacité de traitement d'une station vers ses utilisateurs de 4 Mb/s. On suppose également que le taux d'erreurs est d'environ $10^{-6}$, que les erreurs sont isolées et que le taux d'erreurs résiduel souhaité est meilleur que $10^{-9}$. Avec un en-tête de routage de sept octets, soit 56 éléments binaires, la probabilité d'avoir deux erreurs dans un en-tête est de $C^2$ que multiplie $10^{-12}$, soit voisine de $10^{-9}$. Il faut donc choisir des moyens capables de corriger dans un en-tête deux erreurs, quelles que soient leurs positions dans l'en-tête considérée.

Afin de protéger l'en-tête de 56 éléments binaires, on choisit d'adopter un code B.C.H. (Bose — Chaudhuri — Hocquenghem) de longueur n = 63 éléments binaires, où:

$$n = 2^m - 1 = 63, \text{ soit } m = 6$$

Puisqu'on désire corriger t = 2 erreurs, la redondance, qui s'exprime par le produit mt, est de 12 éléments binaires.

L'en-tête comportera 44 éléments binaires utiles, plus un code B.C.H. raccourci de 12 éléments binaires. Le rendement de transmission de l'en-tête est de 44/56, soit d'environ 80%.

Puisqu'on désire corriger deux erreurs, le polynôme générateur g(x) s'écrit sous la forme d'un produit de deux polynômes irréductibles de degré 6. En prenant les tables des polynômes irréductibles dans l'ouvrage »Error-Correcting Codes« de W. W. Peterson et E. J. Weldon Jr, 2éme édition, in a choisi le polynôme générateur suivant:

$$g(x) = (x^6 + x + 1)(x^6 + x^4 + x^2 + x + 1)$$
soit
$$g(x) = x^{12} + x^{10} + x^8 + x^5 + x^4 + x^3 + 1$$

On va rappeler brièvement les principes de codage et de décodage de l'en-tête:

— coder l'en-tête revient à effectuer la division de $(x^{12} I(x))$ par le polynôme g(x) ci-dessus, (I(x) étant un polynôme de degré 43 représentant l'en-tête utile de 44 éléments binaires, et à transmettre $[x^{12} I(x) + R(x)]$ où R(x), soit 12 éléments binaires, est le reste de la division, ce qui peut se figurer comme suit:

| 1$^{er}$ octet | 2$^e$ octet | 3$^e$ octet | 4$^e$ octet | 5$^e$ octet | 6$^e$ octet | 7$^e$ octet |
|---|---|---|---|---|---|---|
| | | | | | 1/2 1/2 | |

$$\text{———————+———————+——— } x^{12} I(x) \text{ ———————+———————+ ——— } R(x) \text{ ———}$$

— décoder l'en-tête consiste à effectuer la division par g(x) de l'en-tête protégé reçu. Au reste S(x) de cette division appelé syndrome correspond, si S(x) n'est pas nul, un polynôme localisateur d'erreurs E(x) unique qui donne la position des erreurs, soit deux au plus, à corriger sur le champ des 56 éléments binaires de l'en-tête.

Le circuit de correction d'en-tête 36 comprend un registre d'entrée 41$\alpha$ capable d'enregistrer les octets qui sont appliqués à son entrée 42 par le démultiplexeur 81. La sortie du registre 41 est reliée, d'une part, à l'entrée d'un diviseur 43 et, d'autre part, par l'intermédiaire d'un démultiplexeur 44, aux entrées de six registres 45.1 à 45.6.

La sortie du diviseur 43 est reliée à l'entrée d'une table des syndromes 46.

Les sorties élémentaires des registres 45.1 à 45.5 et les quatres premières sorties élémentaires du registre 45.6 sont respectivement reliées aux premières entrées de portes OU-exclusif 47.1 à 47.6, dont les secondes entrées sont respectivement reliées aux (5 × 8 + 4), c'est à dire aux quarante quatre sorties de la table 46. Chaque porte 47.1 à 47.5 représente en fait huit portes individuelles et la porte 47.6 quatre portes individuelles. Les sorties des portes OU exclusif 47.1 à 47.6 sont respectivement reliées aux entrées de registres d'octets corrigés 48.1 à 48.6. Les sorties des registres 48.1 et 48.3 à 48.6 sont respectivement reliées aux entrées d'un registre de sortie 49, par l'intermédiaire d'un multiple-

0 061 391

xeur 50. La sortie du registre 50 est reliée à l'entrée d'une mémoire FiFo de sortie 51 dont la sortie est reliée à 80, par 82. La sortie de 48.1 est reliée, en parallèle, aux entrées des circuits 40 et 85. La sortie de 48.2 est reliée à l'entrée du circuit 39. Les sorties de 48.5 et 48.6 sont reliées à l'entrée du circuit 38. Le circuit 36 est encore complété par un compteur-séquenceur 52 dont l'entrée de remise à zéro est reliée à 33 par une liaison 87.

Le démultiplexeur 44 est actionné à la fréquence octet délivrée par le séquenceur 52 et oriente successivement les octets délivrés par 41 vers les registres 45.1 à 45.6. Le diviseur 43 effectue la division du polynôme $x^{12}$ l'(x), où l'(x) représente l'en-tête reçu moins DEL1/DEL2, par le polynôme g(x) pour délivrer le syndrome S(x) à la table 46. La table 46 délivre, sur quarante quatre fils, le polynôme localisateur des erreurs. Les portes OU-exclusif 47.1 à 47.6 effectuent les corrections, au plus au nombre de deux, à apporter aux éléments binaires délivrés par les registres 45.1 à 45.6. Donc l'ensemble des sorties des portes délivre l'en-tête corrigé qui est mis en mémoire momentanément dans les registres 48.1 à 48.6, puis, à l'aide du multiplexeur 50 actionné par l'horloge octet du séquenceur 52, transmis octet par octet dans la mémoirs FiFo 51, par le registre 49.

Il faut bien comprendre que la table 46 ne délivre le polynôme localisateur que si elle reconnaît syndrome appliqué à son entrée. Dans le cas contraire, elle décide de considérer que l'en-tête requ comporte plus de deux erreurs et donc de ne peut pas être exploité. Cette situation est reconnue sur un 45° fil 84 dont le signal inhibe le multiplexeur 50 et redéclenche le fonctionnement du circuit 33.

Le diviseur 43, qui est montré en détail à la Fig. 5, comprend un registre d'entrée 53 dont l'entrée est relée à la sortie du registre 41, Fig. 4, et dont les sorties élémentaires sont respectivement reliées aux premières entrées de huit portes OU-exclusif 54.1 à 54.8. Les sorties de portes 54.1 à 54.8 sont respectivement reliées aux entrées individuelles d'un registre 55 dont la sortie est reliée à l'entrée d'une table 56. La sortie de la table 56 comporte douze fils dont les huit premiers portent la référence R1(i−1) et les quatre derniers la référence R2(i−1). Dans fils R1(i−1), les quatre premiers portant la référence R1(i−1)$_{4F}$ sont respectivement reliés aux premières entrées de quatre portes OU-exclusif 57.1 à 57.4 tandis que les quatre derniers, portant la référence R1(i−1)$_{4f}$ sont respectivement reliés aux quatre dernières entrées d'un registre d'octet 58. Les quatre fils R2(i−1) sont reliés aux entrées d'un circuit à retard 59, dont le retard est égal à un temps octet. Les quatre sorties de 59 sont respectivement reliées aux secondes entrées des portes OU-exclusif 57.1 à 57.4 dont les sorties sont respectivement reliées aux quatre premières entrées du registre d'octet 58. Les sorties élémentaires du registre 58 sont reliées, d'une part, à 54.1 à 54.8 et, d'autre part, aux huit premiers fils Rel de sortie du diviseur. Les quatre fils R2(i−1) sont également reliés aux quatre derniers fils Re2 du diviseur. L'ensemble des fils Re1 et Re2 délivre, après sept lectures successives de la table 56 et le dernier fonctionnement du registre 58, le reste de la division effectuée par le diviseur, c'est à dire le syndrome qui est appliqué à la table 46.

La table 56 contient les restes des divisions des 256 octets possibles (multiplés par $x^{12}$) par le polynôme générateur g(x) mentionné ci-dessus. Le reste d'une division de ce type s'exprime par 12 éléments binaires, au plus, qui sont délivrés sur les fils R1(i−1) et R2(i−1), les huit éléments binaires de poids forts étant délivrés sur les fils R1(i−1)$_{4F}$ et les quatre éléments binaires de poids faibles sur les file R2(i−1)$_{4f}$.

La table 56 qui doit avoir une capacité de 256 mots de douze éléments binaires, peut être constituée par une mémoire morte de cette capacité. Cette mémoire morte peut, en pratique, comprendre trois mémoires mortes de 256 × 4 éléments binaires, telles que des mémoires commercialisées par MMI sous la référence 6301.

On peut montrer que la division d'une suite d'octets ($x^{12}$Si) par g(x) peut se ramener à effecteur les opérations suivantes.

Pour tout octet Si de la suite, on effectue dans 54.1 à 54.8 l'opération:

$$Si \oplus R1(i-1) + R2(i-2) = Oi$$

où

1) $\oplus$ représente l'opération »OU-exclusif« ou addition modulo 2,
2) R1(i−1) représente les huit éléments binaires de poids forts du reste de la division précédente,
3) R2(i−2) représente les quatre éléments binaires de poids faibles du reste de la division qui précéde la précédente, et
4) R1(i−1) $\oplus$ R2(i−2) s'effectue dans 57,1 à 57,4 sur les quatre éléments binaires de poids forts de R1(i−1).

L'octet Oi obtenu est divisé par g(x) pour obtenir le reste Ri que l'on sépare en deux parties R1i et R2i.

Les deux opérations d'obtention de Oi, puis de Ri sont répétées autant de fois qu'il y a d'octets dans la suite proposée. Une fois le dernier octet Sn ainsi traité, on obtient le reste Re par l'opération de concaténation:

6

Re = (R1n $^{(1)}$ R2(n — 1)), (R2n) où »où« représente symboliquement la concaténation.

Dans le circuit de la Fig. 5, la suite des octets Si est introduite au rythme de la réception dans le registre 53, l'octet Oi sert d'entrée d'adressage dans la table 56. La sortie de la table 56 constitue le reste partiel R(i—1) qui correspond à l'octet O(i—1) et qui se décompose en R1(i—1) et R2(i—1), R1(i—1) se décomposant en R1(i—1)$_{4F}$ et R1(i—1)$_{4f}$, le circuit 59 crée R2(i—2) à partir de R2(i—1). L'ensemble des portes OU-exclusif 57,1 à 57.4 effectue l'opération R1(i—1)$_{4F}$ + R2(i—2), le registre 58 forme à partir des sorties des portes 57.1 à 57.4 et des fils R1(i—1)$_{4f}$ le résultat R1(i—1) + R2(i—2). Le registre 55 sert de registre d'adressage à la table 56.En pratique, dans l'exemple d'en-tête mentionné ci-dessus, la suite des octets Si compren sept octets: Le diviseur de la Fig. 5 comprend encore un séquenceur 60 qui entre autres, apè la réception du septième octet, valide l'ensemble des fils Re qui délivre alors le syndrome S(x).

Il apparaît ques les syndromes ont une longueur de douze éléments binaires. Donc, la table des syndromes 46, Fig. 4, doit contenir 4096 entrées. La sortie de la table 46 délivre un signal d'erreur sur deux, au plus, de ses quarante quatre fils. En pratique, la table 46 est constituée par l'ensemble de six mémoires de 4 kilooctets chacune, ces mémoires pouvant être, par exemple des mémoires 2732 commerialisées par la Société INTEL ou 2532 commercialisées par la Société Texas Instruments.

Pendant le traitement de l'en-tête dans le circuit 36, les octets de données qui sont délivrés par le circuit délimiteur 33 à la suite de l'en-tête, sont mis en mémoire dans la mémoire 37 qui est une mémoire FiFo. Plus le traitement du circuit 36 est rapide, plus le champ d'informations d'un paquet peut être court.

Le circuit 40 recueille l'octet F en sortie de 48.1 et, en fonction de son contenu et, s'il s'agit d'un bloc signalant le début de trame transmet un signal à l'unité de sychronsisation 12. Le circuit 39 recueille le second octet D à la sortie de 48.2 et le compare avec l'identité de la station considérée. Si le résultat de la coⁿparaison est négatif, le circuit 39 remet à zéro la mémoire 37 par 88 et inhibe le multiplexeur 82. Si le résultat est positif, le circuit 39 continue à valider le fonctionnement de la mémoire 37 et déclenche le fonctionnement du multiplexeur 82, lequel transmet à la mémoire 80 les octets F, S, N et L provenant de 51, puis immédiatement derrière les octets de données provenant de la mémoire 37. Le circuit 38 recueille aux sorties de 48.5 et 48.6 les douz éléments binaires indiquant la longueur L du bloc. Il contient un compteur qui compte les octets délivrés par le circuit 33 et, quand le contenu du compteur devient égal à la valeur L, il déclenche un signal de validation vers le circuit 33, par 83, et un signal de fin de bloc vers la mémoire 80, par 89. La mémoire 80 sert de mémoire tampon qui peut être lue à une vitesse nettement inférieure à la vitesse d'entrée des données. Le démultiplexeur 86 oriente les octets d'en-tête vers 14, tandis que les octets suivants sont transmis vers 13.

Le circuit de délomitation de blocs 33, dont le schéma est montré à la Fig. 6, comprend deux mémoires PROM 61 et 62, associée à un ensemble de traitement logique 63, et un ensemble de commande logique 64, qui assure le démarrage du fonctionnement des mémoires et de l'ensemble de traitement.

La mémoire PROM 61 comporte huit entrées qui sont reliées aux fils 35 qui transmettent les octets délivrés par le circuit 29, Fig. 3. La mémoire PROM 62 comporte dix entrées dont les huit premières sont également reliées aux fils 35 et dont le rôle des deux dernières E1 et E0 sera explicité dans la suite.

La mémoire PROM 61 comporte trois sorties utiles Q0, Q1 et Q2. Suivant l'octet appliqué à ses entrées d'adresse, les sorties Q0 à Q2 peuvent prendre les valeurs Y0 à Y2 indiquées dans le tableau 1 suivant, selon que l'octet appliqué a une configuration qui correspond exactement à DEL1, ou s'en approche à un élément binaires près, ou à deux éléments binaires près, ou en diffère de plus de deux éléments binaires.

Tableau 1

|  | Y0 | Y1 | Y2 |
|---|---|---|---|
| DEL1 reconnu exact | 0 | 1 | 0 |
| DEL1 approché à 1 eb près | 1 | 0 | 0 |
| DEL1 approché à 2 ebs près | 0 | 0 | 0 |
| DEL1 non approché à moins de 3 ebs près |  |  | 1 |

L'ensemble de traitement 63 comprend trois bascules »D« 65, 66 et 67 dont les entrées 1D sont respectivement relées aux sorties Q0, Q1 et Q2. Les sorties Q des bascules 65 et 66 sont respective-ment reliées aux entrées E0 et E1 de la mémoire PROM 62. La sortie Q de la bascule 67 est reliée, d'une part, à l'entrée d'activation de la mémoire PROM 62 et, d'autre part, à l'entrée 1D d'une bascule »D« 69. La sortie Q de la bascule 69 est reliée à la première entrée d'une porte ET 70 dont la sortie est relée à l'entrée d'affichage S de la bascule 67. La sortie Q8 de la mémoire PROM 62 est reliée à l'entrée d'un inverseur 71 dont la sortie est reliée à l'entrée d'un second inverseur 72. La sortie de l'inverseur 72 est reliée à la première entrée d'une porte ET 73.

Dans la mémoire PROM 62, est mis en mémoire le motif attendu du second octet de délimitation DEL2, Suivant l'octet appliqué à ses huit premières entrées et les signaux Y0 et Y1 appliquées à ses entrées E0 et E1, la sortie Q3 prend les valeurs indiquées Y3 dans le tableau 2 suivant.

Tableau 2

| Y0 | Y1 | DEL2 | Y3 |
| --- | --- | --- | --- |
| 0 | 1 | DEL2 reconnu exact | 0 |
| 0 | 1 | DEL2 approché à 1 eb près | 0 |
| 0 | 1 | DEL2 approché à 2 ebs près | 0 |
| 0 | 1 | DEL2 non approché à moins de 3 ebs près | 1 |
| 1 | 0 | DEL2 reconnu exact | 0 |
| 1 | 0 | DEL2 approché à 1 eb près | 0 |
| 1 | 0 | DEL2 non aprroché à moins de 2 ebs près | 1 |
| 0 | 0 | DEL2 reconnu exact | 0 |

L'ensemble logique de commande 64 comprend une bascule »D« 74 dont l'entrée R de remise à zéro est reliée à la sortie de la porte ET 73, dont l'entrée d'horloge C1 est reliée à la sortie du circuit 38, Fig. 3, et dont la sortie Q est reliée à une entrée à d'une porte OU-NON 75. Il comprend encore une bascule D 76 dont l'entrée d'horloge C1 est reliée au fil 34 transmettant le signal de synchronisation »octet« délivré par le circuit 29, dont la sortie Q est reliée à l'autre entrée de la porte OU-NON 75 et dont l'entrée R est reliée à la sortie d'une porte ET 77. La première entrée de la porte ET 77 est reliée à la sortie Q̄ d'une bascule D 78 dont l'entrée d'horloge C1 est reliée à la sortie de l'inverseur 71.

Par ailleurs, le fil 32 transmettant le signal de synchronisation »élément binaire« délivré par le modem 10 est relié à la seconde entrée de la porte ET 70, à la seconde entrée de la porte ET 73, à la seconde entrée de la porte ET 77 et à l'entrée R de la bascule 78.

Enfin, la sortie de la porte OU-NON 73 est reliée à l'entrée d'activation de la mémoire PROM 61.

Bien entendu quand le signal Y3 est à 0, la délimitation est effectuée.

Quand le signal de synchronisation »élément binaire« est à zéro, ce qui se produit entre les salves et éventuellement, en raison de défaut de transmission, en cours de salve, les sorties des portes 70, 73 et 77 sont à zéro, ainsi que l'entrée R de 78. Donc la sortie Q de la bascule 67 est à 1 tandis que les sorties Q des bascules 74, 76 et 78 sont à 0.

En début de salve, le signal de synchronisation »élément binaire passe à 1, quand le modem détecte la porteuse. A cet instant la sortie Q̄ de la bascule 78 est à 1 et la sortie de 77 passe à 1, si bien qu'à l'arrivée du signal de synchronisation »octet« délivré par 29, la sortie Q de la bascule 76 passe à 1. La sortie de la porte OU-NON 75 passe à 0 ce active la mémoire PROM 61.

En supposant par example que l'octet DEL1 est reconnu exact ou approché à moins de 3 ebs, la sortie Q2 de 61 fait passer la sortie Q de la bascule 67 à 0. Donc la mémoire PROM 62 est activée. On va supposer maintenant que l'octet DEL2 est également reconnu exact dans 62, la sortie Q8 de 62 passe donc à 0, ce qui entraîne un 1 à la sortie de 71 et un 0 à la sortie de 72, donc de 73. Il en résulte, d'abord, que la sortie Q de la bascule 74 reste à 0 et que la sortie Q de la bascule 78 passe à 1 tandis que sa sortie Q̄ passe à 0. Donc la sortie Q de la bascule 76 passe à 0. Les deux entrées de 75 étant à 0, sa sortie est à 1 ce qui inhibe le fonctionnement de la mémoire PROM 61 et, par conséquence, au prochain signal d'horloge octet, le fonctionnement de la mémoire PROM 62 est aussi inhibé. En effet, la sortie Q2 de 61 passe à 1 qui est recopié, à l'octet suivant à la sortie Q de la bascule 67, ce qui entraîne un 1 à la sortie de 68, c'est à dire l'inhibition de la mémoire 62. Par ailleurs, à l'octet suivant, l'état 1 de la sortie Q de 67 est recopié à la sortie Q de la bascule 69, ce qui conduit la sortie de 70 à faire afficher un 1 en permanence à la sortie Q de 67.

A la réception du signal d'horloge d'octet suivant la sortie Q de 69 recopié l'état de la sortie Q de 67.

Par ailleurs, la sortie Q de la bascule 78 mise à 1 a transmis au circuit 36 un signal de remise à zéro au séquenceur 52. Il en résulte que l'en-tête qui suit est traité dans les circuits 36, et 38. Si le code de l'en-tête est reconnu bon dans le circuit 36, le circuit 38, que le paquet soit destiné ou non à la station, délivre un signal à la fin du paquet concerné puisqu'il a reçu l'information de longueur L. Ce signal est appliqué à la première entrée d'une porte OU 79 par une liaison 83. Si la correction d'en-tête à échouée et que cette situation à été reconnue dans le circuit 36, la mémoire 46 transmet un signal qui est applique par une liaison 84 à la seconde entrée de la porte OU 79. La sortie de la porte 79 est reliée à l'entrée C1 de la bascule 74. Donc quand une des entrées de la porte 79 est validée, la sortie Q de 74 délivre un 1 qui, à travers 75, valide à nouveau la mémoire PROM 61. On retrouve alors le fonctionnement déjà décrit.

Dans le cas où la sortie Q2 de 61 délivre un 1, la mémoire PROM 62 n'est jamais validée. Dans le cas où, après avoir reconnu DEL1 exactement ou à 1 eb ou à 2 ebs prés dans 61, la sortie Q8 de la mémoire PROM 62 ne passe à 0, la sortie Q de 78 passe évidemment pas à 1. Par ailleurs, à l'octet qui suit celui qui a mis la sortie Q2 de 61 à0, le 1 de la sortie Q de 67 est recopié par la sortie Q de 69 qui, par 70, remet la sortie Q de 67 à0.

L'homme de l'art pourrait facilement reconstituer les autres différents fonctionnements du circuit de la Fig. 6.

## Revendications

Réseau de communication numérique à système AMRT, dans lequel chaque salve commence par un préambule AMRT, suivi d'un message qui est formé de paquets de nonnées qui se composent chacun d'un en-tête suivi d'un champ d'information, chaque en-tête commençant par des signaux de délimitation de début (DEL1/DEL2), suivis d'une information de type (F), de l'identité de la station destinatrice (D), de l'identité de la station source (S), de l'identité de communication (N) et de la longueur du paquet (L), et complétés par des signaux de protection contre les erreurs (CRC), chaque salve comprenant des octets de »synchronisation octet« (SYN) entre le préambule AMRT et le premier paquet et, éventuellement, mais pas obligatoirement, entre les en-têtes suivants, caractérisé en ce que la partie réception d'un coupleur d'accès au réseau comprend un circuit (29) de reconnaissance de synchronisation d'octets et un circuit de délimitation de paquets (33) auquel sont appliqués les signaux numériques transmis par le circuit (29) de reconnaissance de synchronisation d'octets, la sortie du circuit (33) étant reliée à l'entrée d'un circuit de correction d'en-tête (36) ayant une sortie reliée à un circuit de reconnaissance (39) de l'information de d'identité de la station destinatrice (D), une sortie reliée à un circuit de réception (38) de l'information de longueur du paquet (L) et une sortie (84) reliée à une entrée de commande de démarrage de fonctionnement du circuit de délimitation de paquets (33), la sortie (83) du circuit de réception (38) étant également reliée à une entrée de commande de démarrage de fonctionnement du circuit de délimitation de paquets (33), la sortie du circuit (33) étant également reliée à l'entrée d'une mémoire (37) dont l'entrée de remise à zéro est reliée à la sortie du circuit de reconnaissance (39).

2. Réseau suivant la revendication 1, caractérisé en ce que le circuit de correction d'en-tête (36) comprend des premiers moyens d'enregistrement (45.1 à 45.6) des octests reçus de l'en-tête, un diviseur (43) pour diviser l'en-tête reçu par le polynôme générateur (g(x)), la sortie du diviseur (43) étant reliée aux entrées d'adressage d'une mémoire programmable utilisée en lecture seulement (46) comportant autant de premiers fils de sortie que d'éléments binaires utiles de l'en-tête, lesquels sont reliées aux premières entrées de portes OU-exclusif (47.1 à 47.6) dont les secondes entrées sont reliées aux sorties des premiers moyens d'enregistrement (45.1 à 45.6) et dont les sorties sont reliées aux entrées de seconds moyens d'enregistrement (48.1 à 48.6), le contenu programmable de la mémoire 46 convertissant les données d'adresse représentant le syndrome de la division effectuée dans le diviseur (43) en signaux binaires représentant le polynôme localisateur délivrés sur les premiers fils de sortie de la mémoire (46), laquelle comporte un second fil de sortie (84) qui est activé quand aux données d'adresse ne correspond pas de polynôme localisateur, à l'exclusion de l'adresse nulle.

3. Réseau suivant la revendication 2, caractérisé en ce que le diviseur (43) comprend huit portes OU-exclusif (54.1 à 54.8) dont les premières entrées sont reliées aux entrées dudit diviseur (43) et dont les sorties sont reliées aux entrés d'un premier registre (55) dont les sorties sont reliées aux entrées d'adresse d'une mémoire programmable utilisée en lecture seulement (56) dont les sorties sont réparties en un premier ensemble de quatre fils $(R1(i-1)_{4F})$, un second ensemble de quatre fils $(R1(i-1)_{4f})$ et un troisième ensemble de quatre fils $(R2(i-1)_{4f})$, transmettant respectivement les éléments binaires du signal de sortie de la mémoire du poids le plus élevé au poids le plus faible, le premier ensemble étant relié aux premières entrées de quatre portes OU-exclusif (57.1 à 57.4) dont les sorties sont reliées aux quatre premières entrées d'un registre (58), le second ensemble étant relié aux quatre autres entrées du registre (58) et le troisième ensemble étant relié, à travers un circuit à retard (59) d'un temps d'octet, aux secondes entrées des quatre portes OU-exclusif (57.1 à 57.4), les huit sorties du registre (58) étant reliées aux secondes entrées des huit portes OU-exclusif (54.1 à 54.8), les sorties du registre (58) concaténées avec celle du troisième ensemble formant la sortie du diviseur (43) qui est validée par un séquenceur (60).

4. Réseau suivant l'une des revendications 1 à 3, caractérise en ce que le circuit de délimitation de paquets (33) comprend deux mémoires programmables utilisées en lecture seulement (61 et 62) ayant chacune leurs huit premières entrées d'adresse recevant les octets en parallèle, la première mémoire (61) ayant deux premières sorties reliées, par des bascules de mémoire (65, 66) aux deux dernières entrées d'adresse de la seconde mémoire (62), et une troisième sortie reliée par une bascule de mémoire (67), d'une part, à l'entrée d'activation de la seconde mémoire (62) et, d'autre part, à l'entrée d'une bascule de mémoire (69) dont la sortie est reliée à la première entrée d'un porte ET (70) dont la sortie est reliée à l'entrée d'affichage de la bascule (67), la seconde mémoire (62) comportant une sortie reliée, d'une part, à la première entrée d'une porte ET (73) et, d'autre part, à l'entrée d'un inverseur (71) dont la sortie est reliée à l'entrée d'horloge d'une bascule (78) dont la sortie Q est reliée au circuit d'activation du circuit de correction d'en-tête (36) et dont la sortie Q̄ est reliée à la première entrée d'une porte ET (77) dont la sortie est reliée à l'entrée de remise à zéro d'une bascule (76), les seconde entrées des portes ET (70, 73 et 77) ainsi que l'entrée RAZ de la bascule (78) étant reliées au fil (32) transmettant la présence de la porteuse détectée par le modem de ladite partie réception, la sortie de la porte ET (73) étant reliée à l'entrée RAZ d'une bascule (74) dont l'entrée d'horloge est reliée à la sortie d'une porte OU (79) dont les entrées sont respectivement reliées aux entrées de démarrage du circuit (33) et, dont la sortie Q est reliée à une entrée d'une porte NON-OU (75) dont la sortie est reliée à l'entrée d'activation de la mémoire (61), l'entrée d'horloge de la bascule (76) étant à la liaison (34) de détection de synchronisation octet et sa sortie Q étant reliée à la seconde entrée de la porte NON-OU (75).

## Patentansprüche

1. Binäres Nachrichtenverbindungsnetzwerk mit TDMA-System, bei dem jeder Stoß mit einer TDMA-Präambel beginnt, der eine Nachricht folgt, die aus Datenpaketen gebildet ist, die jeweils aus einem Kopf mit nachfolgendem Informationsfeld bestehen, wobei jeder Kopf mit Startbegrenzungs-Signalen (DEL1/DEL2) beginnt, denen eine Information über Typ (F), Indentität der Bestimmungsstation (D), Indentität der Quellenstation (S), Verbindungsidentität (N) und Paketlänge (L) folgt, und die vervollständigt ist durch Fehlerschutz-Signale (CRC), wobei jeder Stoß »Byte-Synchronisations«-Bytes (SYN) zwischen der TDMA-Präambel und dem ersten Paket und möglicherweise aber nicht notwendigerweise zwischen den folgenden Paketen enthält, dadurch gekennzeichnet, daß der Empfangsteil eines Kopplers für den Zugriff zu dem Netzwerk eine Byte-Synchronisations-Erkennungsschaltung (29) und eine Paketbegrenzungsschaltung (33) enthält, der die binären, von der Byte-Synchronisations-Erkennungsschaltung (29) übertragenen Signale zugeführt werden, daß der Ausgang der Schaltung (33) mit dem Eingang einer Kopfkorrekturschaltung (36) verbunden ist, von der ein Ausgang mit einer Erkennungsschaltung (39) für die Identitätsinformation der Bestimmungsstation verbunden ist, daß ein Ausgang mit einer Empfangsschaltung (38) für die Information der Paketlänge (L) und ein Ausgang (84) mit einem Steuereingang der Paketbegrenzungs-Schaltung (33) für deren Inbetriebsetzung verbunden ist, daß der Ausgang (83) der Empfangsschaltung (38) ferner mit einem Steuereingang der Paketbegrenzungs-Schaltung (33) für deren Inbetriebsetzung verbunden ist, daß der Ausgang der Schaltung (33) ferner mit einem Eingang eines Speichers (37) verbunden ist, dessen Rückstelleingang mit dem Ausgang der Erkennungsschaltung (39) verbunden ist.

2. Netzwerk nach Anspruch 1, dadurch gekennzeichnet, daß die Kopfkorrektur-Schaltung (36) erste Mittel (45.1—45.6) zur Registrierung von von dem Kopf empfangenen Bytes enthält, eine Divisionsschaltung (43) zur Division des empfangenen Kopfes durch das Erzeugerpolynom (g(x)), daß der Ausgang der Divisionsschaltung (43) mit den Adresseneingängen eines programmierbaren Nur-Lesespeichers (46) verbunden ist, der so viele erste Ausgangsdrähte wie nützliche Kopf-Binärelemente enthält, daß diese mit den ersten Eingängen von Exklusiv-ODER-Toren (47.1—47.6) verbunden sind, deren zweite Eingänge mit den Ausgängen der ersten Registrierungsmittel (45.1—45.6) verbunden sind, und deren Ausgänge mit den Eingängen von zweiten Registrierungsmitteln (48.1—48.6) verbunden sind, daß der programmierbare Inhalt des Speichers (46) die Adressendaten, die das Syndrom der in der Divisionsschaltung (43) erzielten Division darstellen, in binäre Signale umsetzt, die das Lokalisations-Polynom darstellen, das von den Ausgangsdrähten des ersten Speichers (46) geliefert wird, der einen zweiten Ausgangsdraht (84) enthält, der aktiviert wird, wenn die Adressendaten mit Ausnahme der Adresse Null nicht dem Lokalisations-Polynom entsprechen.

3. Netzwerk nach Anspruch 2, dadurch gekennzeichnet, daß die Divisionsschaltung (43) acht Exklusiv-ODER-Tore (54.1—54.8) enthält, deren erste Eingänge mit den Eingängen der genannten Divisionsschaltung (43), und deren Ausgänge mit den Eingängen eines ersten Registers (55) verbunden sind, dessen Ausgänge mit den Adressen-Eingängen eines programmierbaren Nur-Lesespeichers (56) verbunden sind, dessen Ausgänge unterteilt sind in eine erste Gruppe von vier Drähten $(R1(i-1)_{4F})$, eine zweite Gruppe von Drähten $(R1(i-1)_{4I})$ und eine dritte Gruppe von vier Drähten $(R2(i-1)_{4I})$, die jeweils die Binärelemente des Speicher-Ausgangssignals von dem am meisten signifikanten zu dem am wenigsten signifikanten übertragen, daß die erste Gruppe mit den ersten Eingängen von vier Exklusiv-ODER-Toren (57.1—57.4) verbunden ist, deren Ausgänge mit den vier ersten Eingängen eines Registers (58) verbunden sind, daß die zweite Gruppe mit den vier anderen Eingängen des Registers (58) verbunden ist, und die dritte Gruppe über eine Verzögerungsschaltung (59) mit einer Verzögerungsdauer von einem Byte mit den zweiten Eingängen der vier Exklusiv-ODER-Tore (57.1—57.4) verbunden ist, daß die acht Ausgänge des Registers (58) mit den zweiten Eingängen der acht Exklusiv-ODER-Tore (54.1—54.8) verbunden sind, daß die Ausgänge des Registers (58), die mit jenem der dritten Gruppe verkettet sind, den Ausgang der Divisionsschaltung bilden, die durch einen Sequenzer gültig gemacht wird.

4. Netzwerk nach einem der Ansprüche 1 bis 3, dadurch gekennzeichnet, daß die Paketbegrenzungs-Schaltung (33) zwei programmierbare Nur-Lesespeicher (61, 62) enthält, deren erste acht Adressen-Eingänge die Bytes jeweils parallel empfangen, daß der erste Speicher (61) zwei erste Ausgänge hat, die mit den beiden letzten Adressen-Eingängen des zweiten Speichers (62) durch Speicher-Kippschaltungen (65, 66) verbunden sind, und daß ein dritter Ausgang einerseits über eine Speicher-Kippschaltung (67) mit dem Aktivierungseingang des zweiten Speichers (62) und andererseits mit dem Eingang einer Speicher-Kippschaltung (69) verbunden ist, deren Ausgang mit dem ersten Eingang eines UND-Tores (70) verbunden ist, dessen Ausgang mit dem Anzeige-Eingang der Kippschaltung (67) verbunden ist, daß der zweite Speicher (62) einen Ausgang hat, der einerseits mit dem ersten Eingang eines UND-Tores (73) und andererseits mit dem Eingang eines Inverters (71) verbunden ist, dessen Ausgang mit dem Takteingang einer Kippschaltung (78) verbunden ist, deren Ausgang Q mit der Aktivierungsschaltung der Kopfkorrektur-Schaltung (36) verbunden ist, und dessen Ausgang Q̄ mit dem ersten Eingang eines UND-Tores (77) verbunden ist, dessen Ausgang mit dem Rückstelleingang einer Kippschaltung (76) verbunden ist, daß die zweiten Eingänge der UND-Tore (70, 73, 77) sowie auch der Rückstell-Eingang der Kippschaltung (78) mit dem Draht (32) verbunden sind, der das von dem Modem des Empfängerteils festgestellte Vorhandensein des Trägers überträgt, daß der Ausgang des UND-Tores (73) mit dem Rückstell-Eingang einer Kippschaltung (74) verbunden ist, deren Takteingang mit dem Ausgang eines ODER-Tores (79) verbunden ist, dessen Eingänge jeweils mit den Starteingängen der Schaltung (33) verbunden sind, deren Ausgang Q mit einem Eingang eines NOR-Tores (75) verbunden ist, dessen Ausgang mit dem Aktivierungseingang des Speichers (61) verbunden ist, daß der Takteingang der Kippschaltung (76) mit der Byte-Synchronisations-Feststellungsverbindung (34) verbunden ist und ihr Ausgang Q mit dem zweiten Eingang des NOR-Tores (75) verbunden ist.

## Claims

1. A TDMA System binary communication network, wherein each burst starts with a TDMA preamble followed by a message which is constituted by data packets comprising each a header followed by the information field, each header starting with start delimitation signals (DEL1, DEL2), followed by type information (F), address station identity (D), source station identity (S), communication identity (N) and the packet length (L), and supplemented by error protection signals (CRC), each burst having »byte synchronization« bytes (SYN) between the TDMA preamble and the first packet, and, possibly but not systematically, between the following packets, characterized in that the receiver part of a network access coupler has a byte synchronization recognizing circuit (29) and a packet delemitation circuit (33) which the binary signals transmitted from the byte synchronization recognizing circuit (29) are applied to, the output of the circuit (33) being connected to the input of a header correction circuit (36) an output of which is connected to an addressee station (D) identy information recognizing circuit (39), another output thereof being connected to a receiver circuit (38) receiving the packet length information (L) an another output (84) thereof being connected to an operation start control input of the packet delimitation circuit (33), the output (83) of the receiver circuit (38) being also connected to an operation start control input of the packet delimitation circuit (33), the output of the circuit (33) being also connected to the input of a memory (37) whose reset input is connected from the output of the recognizing circuit (39).

2. A network according to claim 1, characterized in that the header correction circuit (36) is comprised of first register means (45.1—45.6) for registering the header bytes, a divider (43) for dividing the received header by the generator polynomial (g(x)), the output of the divider (43) being connected to the addressing inputs of a programmable read only memory (46) having as many first output wires as useful header binary elements, which wires are connected to the first inputs of exclusive—OR gates (47.1—47.6) the second inputs of which are connected from the outputs of the first register means (45.1—45.6) and the outputs of which are connected to the inputs of second register means (48.1—48.6), the programmable contents of the memory 46 converting the address data representative of the syndrome of the division achieved in the divider (43) into binary signals representative of the localizer polynomial delivered from the first memory (46) output wires, which memory has a second output wire (84) which is enabled when no localizer polynomial corresponds to the address data, save the nil address.

3. A network according to claim 2, characterized in that the divider (43) is comprised of eight exclusive-OR gates (54.1—54.8) the first inputs of which are connected to the inputs of said divider (43) and the outputs of which are connected to the inputs of a first register (55) the outputs of which are connected to the address inputs of a programmable read only memory (56) the outputs of which are formed of a first four-wire set $(R1(i-1)_{4f})$, a second four-wire set $(R1(i-1)_{4f})$ and a third four-wire set $(R2(i-1)_{4f})$, transmitting respectively the memory output signal bits, from the most significant to the least significant bit, the first set being connected to the first inputs of four exclusive—OR gates (57.1—57.4) the outputs of which are connected to the first four inputs of a register (58), the second set being connected to the four other inputs of the register (58) and the third set being connected, through a one-byte duration delay circuit (59), to the second inputs of the four exclusive-OR gates (57.1—57.4), the eight outputs of the register (58) being connected to the second inputs of the eight exclusive-OR gates (54.1—54.8), the outputs of the register (58) once concatenated with the one of the third set constituting the divider (43) output which is validated by a sequencer (60).

4. A network according to one of claims 1—3, characterized in that the packet delimitation circuit (33) has two programmable read only memories (61, 62) each having its first eight address inputs receiving the bytes in parallel, the first memory (61) having two first outputs connected to the two last address inputs of the second memory (62) through latches (65, 66), and a bird output connected through a latch (67) to the enabling input of the second memory (62) on the one hand, and, on the other hand, to the input of a latch (69) the output of which is connected to the first input of an AND gate (70) the output of which is connected to the set input of the latch (67), the second memory (62) having an output connected to the first input of an AND gate (73) on the one hand, and, on the other hand, to the input of an inverter (71) the output of which is connected to the clock input of a latch (78) the output Q of which is connected to the enabling circuit of the header correction circuit (36) and the output $\bar{Q}$ of which is connected to the first input of an AND gate (77) the output of which is connected to the reset input of a latch (76), the second inputs of the AND gates (70, 73, 77) as also the reset input of the latch (78) being connected from the wire (32) transmitting the carrier presence detected by of said receiver part, the output of the AND gate (73) being connected to the reset input of a latch (74) the clock input of which is connected from the output of an OR gate (79) the inputs of which are respectively connected from the start inputs of the circuit (33) and the output Q of which is connected to an input of a NOR gate (75) the output of which is connected to the enabling input of the memory (61), the clock input of the latch (76) being connected from the byte synchronization detection connection (34) and the output Q of the latch (76) being connected to the second input of the NOR gate (75).

# FIG.1

| SALVE 1 | SALVE 2 | SALVE 3 | ---- | SALVE N | TRAME AMRT |

| PRÉAMBULE AMRT | SYN | PAQUET | PAQUET | SYN | PAQUET | ---- | PAQUET | SALVE |

| SYN | SYN | SYN | DEL 1 | DEL 2 | F | D | S | N | L / CRC | CHAMP D'INFORMATIONS | DEL 1 | DEL 2 | F | --- |

EN-TÊTE

0 061 391

# FIG.2

MODEM  *10*

COUPLEUR  *11*  *13*  *14*

UNITE DE SYNCHRO.  *12*

MEMOIRE  *17*

CIRCUIT DE COMMANDE AMRT  *16*  *23*

MEMOIRE  *18*

CIRCUIT DE COMMANDE DE COMMUNI-CATION  *19*  *24*

MEMOIRE TAMPON DE DONNEES  *20*  *27*  *25*

OPERATEUR DE GESTION  *21*  *28*

CIRCUIT DE COMMANDE DE COMMUTATION  *22*  *26*

*15*  BUS DES DONNEES

BUS DES REFERENCES

0 061 391

# FIG.3

FIG.4

# FIG.5

de 41 (Fig.4)

43

REGISTRE — 53

Re2    4

vers, 46
(Fig.4)

Re1

8

54.1 à 54.8

REGISTRE — 58

REGISTRE — 55

57.1 à 57.4

56

59

CIRCUIT
A
RETARD

4

R2(i-1)

4

TABLE

R1(i-1)₄F

60

R1(i-1)₄f

SEQ.

8

0 061 391

# FIG.6